(19) Europäisches Patentamt
European Patent Office
Office européen des brevets

(11) Veröffentlichungsnummer: **0 029 009**
**B1**

(12) # EUROPÄISCHE PATENTSCHRIFT

(45) Veröffentlichungstag der Patentschrift: **21.12.83**

(21) Anmeldenummer: **80810339.4**

(22) Anmeldetag: **05.11.80**

(51) Int. Cl.³: **C 09 B 41/00**, C 09 B 67/22, C 09 B 29/00, C 09 B 35/00, C 09 B 35/10

(54) **Herstellung von Pigmenten.**

(30) Priorität: **07.11.79 GB 7938591**

(43) Veröffentlichungstag der Anmeldung: **20.05.81 Patentblatt 81/20**

(45) Bekanntmachung des Hinweises auf die Patenterteilung: **21.12.83 Patentblatt 83/51**

(84) Benannte Vertragsstaaten: **CH DE FR GB IT LI**

(56) Entgegenhaltungen:
**CH - A - 471 878**
**GB - A - 599 608**
**GB - A - 908 202**

(73) Patentinhaber: **CIBA-GEIGY AG, Patentabteilung Postfach, CH-4002 Basel (CH)**

(72) Erfinder: **Pechey, David Thomas, Dr., 32 Braehead Road Hardgate Clydebank, Dumbartonshire G81 6PH Schottland (GB)**
Erfinder: **Coy, John Hugh, Dr., 29 Merrygreen Place, Stewarton Ayrshire Schottland (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 029 009 B1

BUNDESDRUCKEREI BERLIN

# Herstellung von Pigmenten

Die vorliegende Erfindung betrifft ein Verfahren zur Herstellung von Pigmenten, insbesondere von Monoazo- und Disazo-pigmenten.

Azopigmente werden üblicherweise mittels einer der folgenden Methoden hergestellt:

1) Zugabe einer Lösung eines Diazonium- oder Tetrazonium-salzes eines geeignet substituierten aromatischen Amins oder Diamins zu einer Lösung oder einer feinen Dispersion der Kupplungskomponente.
2) Gleichzeitige Zugabe einer Lösung eines Diazonium- oder Tetrazonium-salzes eines geeignet substituierten aromatischen Amins oder Diamins und einer Lösung oder Suspension der Kupplungskomponente zu einer Pufferlösung eines gewünschten pH-Wertes.
3) Zugabe einer Lösung oder Suspension der Kupplungskomponente zu einer Lösung eines Diazonium- oder Tetrazonium-salzes eines geeignet substituierten aromatischen Amins oder Diamins.

Wird die dritte Methode für die Kupplung einer Acetoacetarylamid-Kupplungskomponente mit einem Tetrazoniumsalz angewandt, so erhält man Produkte, welche, obwohl farbstark, oft unrein sind.

Es wurde nun ein Kupplungsverfahren gefunden, welches, verglichen mit den herkömmlichen Methoden, saubere Farbstoffe mit verbesserter Farbstärke, Transparenz und Dispergierbarkeit liefert. Ein wichtiger Vorteil der nach dem neuen Verfahren hergestellten Produkte ist die hohe Farbstärke, ohne Einbuße der Kristallinität.

Die vorliegende Erfindung betrifft ein Verfahren zum Herstellen von Monoazo- oder Disazopigmenten, dadurch gekennzeichnet, daß man

a) zu einer Lösung eines Diazonium- und/oder Tetrazoniumsalzes eines aromatischen oder heterocyclischen Amins eine Lösung oder Suspension, enthaltend 0,1 – 50 Gew.-% des theoretisch einzusetzenden Gesamtgewichtes, einer oder mehrerer Kupplungskomponenten zugibt und
b) das gemäß Verfahrensschritt a) erhaltene Produkt als Zusatz bei der Herstellung von Mono- und Disazopigmenten oder deren Mischungen verwendet.

Die für das vorliegende Verfahren zu wählenden Verfahrensparameter, wie pH-Wert, Temperatur etc., sind dem Fachmann bekannt, sind sie doch von den in herkömmlichen Kupplungsreaktionen geeigneten Verfahrensbedingungen nicht verschieden.

Vorzugsweise wird im Verfahrensschritt b) die gleiche Kupplungskomponente eingesetzt wie im Verfahrensschritt a).

In einer bevorzugten Verfahrensweise werden im Verfahrensschritt a) 1 – 30% und insbesondere 10 – 30% der theoretisch zu verwendenden Kupplungskomponente eingesetzt. Werden höhere Mengen eingesetzt, so erhält man in der Regel unreinere Endprodukte.

Das im Verfahrensschritt a) erhaltene, teilweise gekuppelte Diazonium- oder Tetrazoniumsalz kann direkt als Lösung oder Suspension weiterverarbeitet werden oder, falls gewünscht, vor dem Verfahrensschritt b) isoliert und gegebenenfalls gereinigt werden.

Besonders vorzüglich eignet sich das Verfahren für die Kupplung von Tetrazoniumsalzen.

Ohne sich auf einen Reaktionsmechanismus festzulegen, scheint die Kupplung z. B. zwischen 3,3'-Dichlorbenzidin (DCB) und Acetoacetylarylamiden (AAA) nach folgendem Schema abzulaufen:

a) $X^{\ominus}[DCB]^{\oplus\oplus} X^{\ominus} + AAA$ —— $(X^{\ominus}[DCB]^{\oplus}\text{—}AAA) + HX$

b) $AAA + (X^{\ominus}[DCB]^{\oplus}\text{—}AAA)$ —— $AAA\text{—}[DCB]\text{—}AAA + HX$

worin $X^{\ominus}$ das Anion des entsprechenden 3,3'-Dichlorbenzidin-Tetrazoniumsalzes ist.

Das mono-gekuppelte Zwischenprodukt

$X^{\ominus}[DCB]^{\oplus}\text{—}AA$

ist aus der GB-PS 908 202 bekannt. Aus dieser Patentschrift ist allerdings nicht zu entnehmen, daß sich diese Produkte als Zwischenprodukte für die Herstellung von Pigmenten mit verbesserten Eigenschaften eignen. Bevorzugt handelt es sich dabei um Tetrazoniumsalze.

Wie erwähnt können in den Verfahrensschritten a) und b) zwei verschiedene Kupplungskomponenten eingesetzt werden. Es ist aber auch möglich, in Verfahrensschritt a) und/oder b) zwei oder mehrere verschiedene Kupplungskomponenten einzusetzen. Falls erwünscht, kann zum Produkt des Verfahrensschrittes a) eine Lösung eines weiteren Diazonium- oder Tetrazoniumsalzes beigefügt werden und dieses Gemisch im Verfahrensschritt b) eingesetzt werden. Wird im Verfahrensschritt b)

ein Überschuß an Kupplungskomponente eingesetzt, so kann dieser nach der eigentlichen Reaktion mit weiterem Diazonium- oder Tetrazoniumsalz zur Umsetzung gebracht werden.

Vorzugsweise werden in den Verfahrensschritten a) und b) jeweils eine oder zwei und insbesondere jeweils nur eine Kupplungskomponente eingesetzt. Während im Verfahrensschritt b) in der Regel höchstens eine weitere Azokomponente und insbesondere keine weitere zum Einsatz kommt, können im Verfahrensschritt a) eine oder zwei Azokomponenten verwendet werden.

Beispiele von Tetrazoniumsalzen, welche allein oder in Mischungen eingesetzt werden können, sind solche, welche durch Tetrazotierung geeigneter Benzidine wie 3,3'-Dichlorbenzidin, o-Dianisidin, Tetrachlorbenzidin, Dinitrobenzidin, o,o'-Dimethylbenzidin oder 2,2'-Disulfobenzidin. Ein bevorzugtes Tetrazoniumsalz ist das tetrazotierte 3,3'-Dichlorbenzidin. Beispiele geeigneter Diazonium-Verbindungen sind solche, die durch Diazotierung von Anilin-Derivaten, wie Anilin substituiert durch eine oder mehrere Alkyl-, Aryl-, Arylalkyl-, Nitro-, Halogen- (z. B. Chlor oder Brom), Alkoxy-, Aryloxy- oder heterocyclischen Amin-Gruppen, wie sie üblicherweise bei der Herstellung von Diazonium-Verbindungen verwendet werden.

Ebenso geeignete Diazonium-Verbindungen sind Anilin-Derivate, welche mit einer oder mehreren wasserlöslich machenden Gruppen, wie Sulfonsäure oder Carbonsäuregruppen substituiert sind, welche nach der Kupplung insbesondere durch Versalzung wasserunlöslich gemacht werden können. Beispiele geeigneter Anilin-Derivate sind: B-Säure (2-Chlor-5-aminobenzol-sulfonsäure), 2B-Säure (2-Amino-4-chlor-5-methylbenzol-sulfonsäure), 4B-Säure (2-Amino-5-methylbenzol-sulfonsäure), C-Säure (2-Amino-4-methyl-5-chlorbenzol-sulfonsäure) und o-Nitroanilin-p-sulfonsäure.

Beispiele von geeigneten Kupplungskomponenten sind Acetoacetarylamide, welche unsubstituiert oder mit einer oder mehreren Gruppen, wie Aryl, Alkyl, Arylalkyl, Alkoxy, Aryloxy, Halogen (z. B. Chlor oder Brom), Amid, Imid, Ester, Säuren oder Nitro substituiert sein können oder Acetoacetarylamid-Derivate von gegebenenfalls substituierten heterocyclischen Aminen, wie sie üblicherweise zur Herstellung von Azopigmenten verwendet werden.

Beispiele für Kupplungskomponenten dieser Art sind:

Acetoacetylaminobenzol, 2-Acetoacetylaminotoluol, 4-Acetoacetylaminotoluol,
2-Acetoacetylaminoanisol, 4-Acetoacetylaminoanisol, 2-Acetoacetylaminophenetol,
4-Acetoacetylaminophenetol, 1-Acetoacetylamino-2,4-dimethylbenzol,
1-Acetoacetylamino-2,4-dimethoxybenzol, 1-Acetoacetylamino-2,5-dimethoxybenzol,
1-Acetoacetylamino-2,5-dichlorobenzol, 1-Acetoacetylamino-2,5-dimethoxy-4-chlorobenzol,
5-Chlor-2-acetoacetylaminotoluol, 3-Chlor-4-acetoacetylaminotoluol,
1-Acetoacetylaminonaphthalin, 2-Acetoacetylaminonaphthalin,
5-Acetoacetylaminobenzimidazolon und 5-Acetoacetylamino-6-methylbenzimidazolon.

Als Kupplungskomponenten eignen sich auch solche, die der Pyrazolon-Reihe angehören, z. B. 1-Phenyl-3-methylpyrazol-5-on, 1-(p-Tolyl)-3-methylpyrazol-5-on und 1-Phenyl-3-äthoxycarbonylpyrazol-5-on.

Weitere Pyrazolon-Kupplungskomponenten sind 1-Arylpyrazol-5-one, in welchen Aryl z. B. Phenyl bedeutet, welches gegebenenfalls mono- oder disubstituiert ist, z. B. durch Halogenatome oder $C_1-C_4$-Alkyl oder Alkoxy; oder die Arylgruppe leitet sich von 1-Amino-naphthalin oder 2-Amino-naphthalin ab.

Andere geeignete Kupplungskomponenten sind 1-Naphthol und 2-Naphthol, welche Halogen- und Carboxy-substituiert sein können.

Wird das vorliegende Verfahren benutzt, um Monoazopigmente herzustellen, so kann es sich z. B. um Hansa-Gelb-Typen handeln, welche durch Kupplung geeignet substituierter aromatischer Amine mit Acetoacetaniliden gewonnen werden; oder es sind Pigmente, welche sich von den gleichen, für die Hansa-Gelb-Herstellung verwendeten Diazokomponenten ableiten, jedoch mit Kupplungskomponenten der Hydroxynaphthalin-Reihe, z. B. $\beta$-Naphthol, oder substituierte Amide von $\beta$-Oxynaphthoesäure, oder $\beta$-Oxynaphthoesäure selbst, bzw. Derivate, z. B. Salze dieser Pigmente, kuppelt.

Wird das Verfahren zur Herstellung von Disazopigmenten verwendet, so sind wichtige Vertreter Pigmente, welche durch die Kupplung tetrazotierten Dichlorbenzinidinen mit Acetoacetanilid-Derivaten, gegebenenfalls substituierten Pyrazolonen oder Derivaten von $\beta$-Oxynaphtholsäureamiden hergestellt werden.

Die nach dem vorliegenden Verfahren hergestellten Pigmente zeichnen sich durch verbesserte Eigenschaften, wie Farbstärke, Transparenz, Fließeigenschaften, Reinheit und Dispergierbarkeit, verglichen mit nach herkömmlichen Methoden hergestellten analogen Pigmenten oder Pigmentgemischen aus.

Die Eigenschaft der nach dem vorliegenden Verfahren hergestellten Pigmente kann mittels an sich bekannter Behandlungen weiter verbessert werden. Solche Nachbehandlungen sind z. B.:

(i) Zugabe eines wasserlöslichen Farbstoffes, z. B. eines wasserlöslichen Monoazofarbstoffes, eines Diphenylchrysoins, vor allem jedoch eines Diarylid-Farbstoffes. Diese Technik ist z. B. aus der US-PS 3 776 749 bekannt, wo ebenfalls die Einarbeitungsmethoden im Detail beschrieben sind. Besonders

wertvolle wasserlösliche Farbstoffe können durch Kuppeln eines auf geeignete Weise wasserlöslich gemachten tetrazotierten Benzidins mit einem Kupplungsmittel, wie einem Acetoacetanilid oder Pyrazolon, welches keine wasserlöslich machende Gruppen enthält; oder durch Kuppeln eines tetrazotierten Benzidins mit einem Kupplungsmittel, welches wasserlöslich machende Gruppen enthält; oder schlußendlich durch Kuppeln eines tetrazotierten Benzidins mit einem Kupplungsmittel, wobei beide Komponenten wasserlöslich machende Gruppen enthalten, hergestellt werden. Unter wasserlöslich machenden Gruppen werden Gruppen verstanden, wie Sulfonsäure- oder Carbonsäuregruppen und wasserlösliche Metallsalze davon, Aminogruppen und wasserlösliche Salze von Aminogruppen, z. B. diejenigen, die mit aliphatischen Säuren gebildet werden. Die freien Säuren der Farbstoffe können z. B. durch Kochen der Natriumsalze der Farbstoffe, die man bei den Kupplungsreaktionen in Chlorwasserstoffsäure erhält, hergestellt werden. So kann z. B. das Pigment ein mit Tetrazo-3,3'-dichlorbenzidin gekuppeltes Acetoacet-o-toluidid sein, und der kösliche Farbstoff könnte Acetoacetanilid gekuppelt mit Tetrazo-4,4'-diamino-2,2'-biphenyldisulfonsäure sein; alternativ könnte das Pigment Acetoacet-m-xylidid gekuppelt mit Tetrazo-3,3'-dichlorbenzidin und der lösliche Farbstoff Acetoacet-m-xylidid gekuppelt mit Tetrazo-4,4'-diamino-2,2'-diphenyldisulfonsäure sein. Es können auch Mischungen löslicher Farbstoffe verwendet werden.

Die sulfonierten oder carboxylierten Benzidine, die erfindungsgemäß verwendet werden, können mono- oder disubstituiert sein oder können mehr als zwei Säuregruppen aufweisen. Sehr geeignete Benzidine sind disubstituiert, d. h., es sind diejenigen Verbindungen, die als Substituenten eine Sulfonsäuregruppe oder eine Carbonsäuregruppe an jedem aromatischen Kern tragen.

Gewünschtenfalls kann der adsorbierte lösliche Farbstoff in einer späteren Stufe unlöslich gemacht werden, z. B. durch die Bildung unlöslicher Salze mit Metallen der Gruppen IA, IB, IIA, IIB, IIIA, IIIB und VIII des Periodensystems. Beispiele für solche wasserlöslichen Farbstoffe finden sich in der US-PS 3 776 749.

Im allgemeinen werden bis zu 25 Gew.-% des löslichen Farbstoffes, bezogen auf das erfindungsgemäß hergestellte Pigment oder Pigmentgemisch, zugesetzt, vorzugsweise jedoch 1 bis 10%.

(ii) Nachbehandlung mit einem Lösungsmittel. Es handelt sich dabei insbesondere um polare aliphatische Lösungsmittel, welche zumindest teilweise mit Wasser mischbar sind, z. B. $C_1-C_4$-Alkohole, kurzkettige Monocarboxylate; Niederalkylketone oder kurzkettige Alkoxyalkanole oder Glycole. Die Lösungsmittel-Nachbehandlung von Pigmenten ist im Detail in der US-PS 3 532 030 beschrieben.

(iii) Hitzenachbehandlung der nach dem erfindungsgemäßen Verfahren hergestellten Pigmente und sauren, basischen oder neutralen Bedingungen.

(iv) Nachbehandlung der nach dem erfindungsgemäßen Verfahren hergestellten Pigmente mit langkettigen Alkoholen, Estern, Aminen oder Amiden oder auch mit ungeladenen, kationischen oder anionischen oberflächenaktiven Mitteln und ferner mit harzartigen Substanzen.

Die Isolierung der erfindungsgemäß hergestellten Pigmente erfolgt auf übliche Weise, z. B. durch Filtrieren und Waschen und Trocknen des Rückstandes. Für gewisse Anwendungen kommen allerdings auch andere Methoden in Frage, z. B. die Verarbeitung des Filtriergutes zu einer wäßrigen Paste oder die Aufnahme in ein organisches Lösungsmittel. Falls erwünscht, können die Pigmente vermahlen werden oder zusammen mit Hilfsmitteln granuliert werden, wie es z. B. in den GB-Pat. Spec. Nos. 2 009 204 und 2 036 057 A) beschrieben ist.

Die erfindungsgemäß hergestellten Verbindungen zeigen die genannten Vorteile in den verschiedenartigsten zu färbenden Medien; wie Anstrichfarben, Kunststoffen und insbesondere in Drucktinten, z. B. flüssige und auch Verpackungstiefdrucktinten, welche z. B. auf Nitrocellulose oder Alkydharzen basieren, ferner Tiefdruckfarben und Tinten auf Ölbasis für lithographische oder Buchdruckzwecke.

In den folgenden Beispielen bedeuten % Gew.-%.

## Beispiel 1

250 Teile Wasser, enthaltend 40 Teile konzentrierter Salzsäure (spez. Gew.: 1,18), und 32,6 Teile 3,3'-Dichlorbenzidin-dihydrochlorid wurden zu einer geschmeidigen Paste zusammengerührt und mit einer Lösung von 13,8 Teilen Natriumnitrit in 25 Teilen Wasser bei 0–5°C tetrazotiert. Die Tetrazoniumsalz-Lösung wurde mit 1 Teil Aktivkohle behandelt, anschließend filtriert und das Filtrat mit Wasser bei 0–5°C auf ein Volumen von 800 Teilen eingestellt.

Die Suspension der Kupplungskomponente wurde durch Auflösen von 43 Teilen 1-Acetoacetylamino-2,4-dimethylbenzol und 9,2 Teilen NaOH in 160 Teilen Wasser und langsamer Zugabe von 18 Teilen Eisessig in 350 Teilen Wasser unter kräftigem Rühren hergestellt.

a) Der pH-Wert der Tetrazoniumsalz-Lösung wurde durch Zugabe von Natriumacetat-trihydrat auf 4,0 eingestellt, und zu dieser Lösung bei 0–5°C 10% der theoretisch einzusetzenden Kupplungskomponenten-Suspension langsam zugefügt.

b) Die so erhaltene Mischung wurde während 10 Min. gerührt und dann unter kräftigem Rühren innerhalb von 50 Min. der restlichen Menge Kupplungskomponenten-Suspension beigemischt. Während der Kupplungsreaktion wurde die Temperatur zwischen 15° und 25°C gehalten, währenddem das pH mittels Zugabe einer 10%igen NaOH-Lösung zwischen 4,7 und 6,5 eingestellt wurde.

Nach der Reaktion wurde das pH auf 6,0 eingestellt (Zugabe einer 10%igen NaOH-Lösung) und das Reaktionsgemisch während 60 Min. auf 95°C erhitzt. Durch Zugabe von kaltem Wasser wurde die Temperatur alsdann auf 70°C gebracht, das Gemisch filtriert, der Rückstand mit Wasser gewaschen, bis keine Chloridionen mehr nachzuweisen waren. Das Produkt wurde bei 50—55°C getrocknet und zu einem gelben Pigment vermahlen.

Eine mit Hilfe des so erhaltenen Pigments eingefärbte Drucktinte auf Ölbasis zeigt eine um 15% erhöhte Farbstärke, verglichen mit der gelben Drucktinte, gefärbt mit demselben nach herkömmlich gekuppeltem Produkt, welches durch Zugabe einer Tetrazoniumsalz-Lösung (s. oben) zu der Kupplungskomponenten-Suspension (s. oben) während 50 Min. bei 15—20°C und einem pH-Wert von 4,7 bis 6,5 erhalten wurde. Die Isolation dieses Vergleichsproduktes erfolgte auf die oben beschriebene Art und Weise. Werden das nach dem neuen und dem herkömmlichen Verfahren hergestellte Pigment für Drucktinten für Verpackungsmaterial verwendet, so zeigt das nach dem erfinderischen Verfahren hergestellte Pigment deutliche Vorteile bezüglich Glanz und Transparenz.

Beispiel 2

Es wurde genau nach der im Beispiel 1 angegebenen Methode vorgegangen, mit der einzigen Ausnahme, daß im Verfahrensschritt a) 20% Kupplungskomponenten-Suspension eingesetzt wurden. Das so erhaltene Produkt hat die gleichen ausgezeichneten Eigenschaften wie das im Beispiel 1 beschriebene Pigment.

Beispiel 3

Es wurde genau nach der im Beispiel 1 angegebenen Methode vorgegangen, mit der einzigen Ausnahme, daß im Verfahrensschritt a) 30% Kupplungskomponenten-Suspension eingesetzt wurden. Das so erhaltene Produkt hat die gleichen Vorteile wie das im Beispiel 1 beschriebene Pigment.

Beispiel 4

Die im Beispiel 1 beschriebene Tetrazoniumsalz-Lösung und Kupplungskomponenten-Suspension wurden wie folgt zur Reaktion gebracht: Bei einer Temperatur von 0° bis 5°C wurde der pH-Wert der Tetrazoniumsalz-Lösung mittels Natriumacetat-trihydrat auf 4,0 eingestellt. Unter Rühren wurden 10% der Kupplungskomponenten-Suspension zugemischt. Die teilweise gekuppelte Mischung wurde während weiteren 10 Min. gerührt und die Tetrazoniumsalz-Lösung durch Vakuum-Filtration von unlöslichen Bestandteilen befreit. Das unlösliche Material wurde unter kräftigem Rühren der restlichen Kupplungskomponenten-Suspension beigegeben. Darauf wurde auch das Filtrat, welches ständig bei 0—5°C gehalten wurde, innerhalb von 50 Min. unter kräftigem Rühren der Kupplungskomponenten-Suspension beigemischt, wobei die Temperatur zwischen 15° und 20°C und der pH-Wert zwischen 4,7 und 6,5 (mittels NaOH, 10%) gehalten wurden.

Nach Beendigung der Reaktion wurde durch Zugabe einer 10%igen Natronlaugelösung das pH auf 7,0 eingestellt. 20,5 Teile hydrierte Abietinsäure (Staybelite Resin®) wurden in 200 Teilen Wasser, enthaltend 2,5 Teile NaOH, bei 95°C aufgelöst und nach Abkühlen auf 40°C dem Pigmentreaktionsgemisch zugegeben. Die Mischung wurde während 60 Min. auf 95°C erhitzt und der pH-Wert mittels einer HCl-Lösung auf 6,0 eingestellt. Nach 10 Min. wurde durch Zugabe von kaltem Wasser die Temperatur auf 70°C gebracht, das Gemisch filtriert und der Rückstand gewaschen, bis keine Chloridionen mehr nachweisbar waren. Das Produkt wurde bei 50—55°C getrocknet und zu einem gelben Pigment vermahlen.

Verglichen mit einem herkömmlich hergestellten Pigment (s. Beispiel 1) zeigt eine Druckfarbe auf Ölbasis, gefärbt mit einem nach Beispiel 4 hergestellten Pigment, eine um 10% erhöhte Farbstärke.

Beispiel 5

Die Tetrazoniumsalz-Lösung wurde gemäß der in Beispiel 1 beschriebenen Methode hergestellt, wobei die 800 Teile Lösung bei einem pH-Wert von <1 und einer Temperatur von 0° bis 5°C gehalten wurden. Zu dieser Lösung wurden 1,37 Teile eines nicht-ionischen oberflächenaktiven Mittels (Cirrasol

ALN-WF®: Kondensationsprodukt eines Fettalkohols mit Äthylenoxid) zugegeben.

Zu dieser Mischung wurden 10% der Kupplungskomponenten-Suspension gemäß Beispiel 1 unter Rühren zugegeben und die Reaktionsmischung während 30 Min. weitergerührt. Zur restlichen Kupplungskomponenten-Suspension wurden zuerst 100 Teile Natriumacetat-trihydrat und danach das oben beschriebene, teilweise gekuppelte Reaktionsgemisch innerhalb von 50 Min. beigemischt. Während der Kupplung wurde die Temperatur zwischen 15° und 20°C und der pH-Wert zwischen 4,7 und 6,5 (Zugabe von NaOH, 10%) gehalten.

1,3 Teile eines wasserlöslichen Farbstoffes, erhalten durch die Kupplung von tetrazotierter Benzidin-2,2'-disulfonsäure und 1-Acetoacetylamino-2,4-dimethylbenzol, wurden bei 70°C in 160 Teilen Wasser gelöst und der oben beschriebenen Reaktionsmischung beigefügt. Durch Zugabe einer 10%igen NaOH-Lösung wurde das pH auf 7,0 erhöht und eine Lösung (95°C) von 13,7 Teilen hydrierter Abietinsäure (Staybelite Resin®) in 320 Teilen Wasser, enthaltend 2,0 Teile NaOH, zugefügt. Danach ließ man das Reaktionsgemisch auf 40°C abkühlen.

Das Gemisch wurde alsdann während 60 Min. auf 95°C erhitzt und durch Zugabe von 2N HCl wurde das pH auf 6,0 eingestellt. Durch Zugabe von kaltem Wasser wurde die Temperatur auf 70°C reduziert und das gelbe Pigment wie in Beispiel 1 isoliert.

Verglichen mit einem nach herkömmlicher Art hergestellten Pigments (s. Beispiel 1), welches mit dem gleichen wasserlöslichen Farbstoff (s. Beispiel 5) behandelt worden ist, zeigt das Pigment gemäß Beispiel 5 in Druckfarben auf Ölbasis eine um 15% erhöhte Farbstärke.

Ähnliche Resultate werden erhalten, wenn anstelle von Cirrasol ALN-WF® andere Fettalkohol-Alkylenoxid-Kondensate oder Alkylphenol-Alkylenoxid-Kondensate als oberflächenaktive Substanzen eingesetzt werden.

## Beispiel 6

Die Tetrazoniumsalz-Lösung gemäß Beispiel 1 wurde wie in Beispeil 5 mit Cirrasol ALN-WF® behandelt. 5% der Kupplungskomponenten-Suspension (s. Beispiel 1) wurden langsam zugegeben das Gemisch während 30 Min. gerührt. Das Reaktionsgemisch wurde unter kräftigem Rühren der verbleibenden Kupplungskomponenten-Suspension beigemischt. Bei den im Beispiel 5 beschriebenen Bedingungen erfolgte die Kupplung und alsdann die Behandlung mit dem im Beispiel 5 beschriebenen wasserlöslichen Farbstoff. Die Behandlung mit hydrierter Abietinsäure und die Isolierung des Pigments erfolgte ebenfalls nach Beispeil 5. Das so erhaltene Produkt zeigte die gleichen vorteilhaften Eigenschaften wie jenes aus Beispiel 5.

## Beispiel 7

Die Tetrazoniumsalz-Lösung gemäß Beispiel 1 wurde bei einem pH-Wert von 1 mit einer Lösung von 1,5 Teilen Cirrasol ALN-WF® in 50 Teilen Wasser behandelt.

Die Suspension der Kupplungskomponente wurde wie folgt hergestellt: 32,7 Teile Acetoacetanilid und 9,21 Teile NaOH wurden in 300 Teilen Wasser aufgelöst, die Temperatur auf 0° bis 5°C gebracht und unter kräftigem Rühren eine Lösung von 15 Teilen Eisessig in 360 Teilen Wasser zugetropft, wobei die Temperatur zwischen 15° und 20°C gehalten wurde. Die Kupplungsreaktion, Behandlung mit hydrierter Abietinsäure und die Aufarbeitung des Pigments erfolgte wie in Beispiel 5 beschrieben wurde, mit Ausnahme, daß keine Behandlung mit einem wasserlöslichen Farbstoff erfolgte.

Wiederum wurde das so erhaltene Pigment mit einem analog nach Beispiel 1 und gemäß Beispiel 5 behandelten herkömmlich hergestellten Pigment verglichen. Das Pigment gemäß Beispiel 7 zeigte in Drucktinten auf Ölbasis eine um 15% erhöhte Farbstärke und eine wesentlich verbesserte Transparenz.

## Beispiel 8

Die Tetrazoniumsalz-Lösung gemäß Beipsiel 1 wurde auf einen pH-Wert von <1 gebracht.

Die Suspension der Kupplungskomponente wurde wie folgt bereitgestellt: 40,2 Teile 2-Acetoacetylaminotoluol und 9,21 Teile NaOH wurden in 300 Teilen Wasser gelöst, die Temperatur im Eisbad auf 0° bis 5°C gebracht und unter ständigem Rühren 15,0 Teile Eisessig in 360 Teilen Wasser zugetropft, wobei man die Temperatur auf 15° bis 20°C ansteigen ließ. Darauf wurde eine Lösung von 1,5 Teilen Cirrasol ALN-WF® in 50 Teilen Wasser zugetropft.

10% dieser Kupplungskomponenten-Suspension wurden langsam unter Rühren der Tetrazoniumsalz-Lösung beigemischt und das Reaktionsgemisch während 10 Min. weitergerührt. Die Kupplungsreaktion wurde wie in Beispiel 5 beschrieben vervollständigt.

Nach Beendigung der Kupplungsreaktion wurde das pH mittels einer 10%igen NaOH-Lösung auf 7,0 eingestellt. Eine Lösung (95°C) von 13,2 Teilen hydrierter Abietinsäure in 300 Teilen Wasser, welches

1,65 Teile NaOH enthielt und langsam auf 40°C abgekühlt wurde, wurde dem Reaktionsgemisch beigemischt. Die Aufarbeitung erfolgte wie in Beispiel 1.

Der Vergleich des so erhaltenen Pigments mittels analogen nach herkömmlichen Methoden (s. Beispiel 1) hergestellten Pigments zeigt, daß das Pigment gemäß Beispiel 8 in einer Drucktinte auf Ölbasis eine um 10% erhöhte Farbstärke und eine bessere Transparenz aufweist.

## Beispiel 9

Erneut wurden 800 Teile einer Tetrazoniumsalz-Lösung (pH < 1) eingesetzt.

Die Suspension der Kupplungskomponente wurde wie folgt hergestellt: 43,5 Teile 2-Acetoacetylaminoanisol und 9,21 Teile NaOH wurden in 300 Teilen Wasser gelöst und anschließend wie im Beispiel 8 behandelt. Die zweistufige Kupplung erfolgte wie im Beispiel 7.

Verglichen mit einem analogen nach herkömmlichen Methoden (s. Beispiel 1) hergestellten Pigment zeigt das Pigment nach Beispiel 9 in einer Drucktinte auf Ölbasis eine um 5% erhöhte Farbstärke.

## Beispiel 10

Eine weiche Paste, bestehend aus 25,26 Teilen 3,3'-Dichlorbenzidindihydrochlorid und 150 Teilen Wasser, enthaltend 34,0 Teile HCl (spez. Gewicht: 1,18), wurden auf übliche Weise bei 0–5°C mit 10,5 Teilen Natriumnitrit in 20 Teilen Wasser unter Rühren tetrazotiert. Eine klare Lösung wurde durch Zugabe von 1 Teil Aktivkohle und anschließendem Filtrieren erhalten. Bei 0–5°C wurde die Lösung mittels Wasser auf 360 Teile verdünnt.

Die Kupplungskomponenten-Lösung wurde durch Auflösen von 29,14 Teilen 1-(p-Tolyl)-3-methylpyrazol-5-on in 210 Teilen Wasser, enthaltend 7,2 Teile NaOH, hergestellt.

Eine Lösung von 1,25 Teilen Cirrasol ALN-WF® in 25 Teilen Wasser wurde der oben beschriebenen Tetraziniumsalz-Lösung beigefügt und alsdann das Gemisch mit 10% der Kupplungskomponenten-Lösung zur Reaktion gebracht, wobei 10 Min. weitergerührt wurde. In einem Kupplungsgefäß wurden 1,75 Teile Natriumacetat in 500 ml Wasser aufgelöst und 2,5 Teile Calciumsulfat zugefügt. Der pH-Wert wurde auf 5,5–5,7 eingestellt und 5% der oben beschriebenen Kupplungskomponenten-Lösung zugetropft, wobei das pH ständig mittels Zugabe einer 2N-HCl-Lösung im angegebenen Bereich gehalten wurde. Anschließend wurde der Rest der Kupplungskomponenten-Lösung und die bereits teilweise gekuppelte Tetrazoniumsalz-Lösung gleichzeitig während 90 Min. unter kräftigem Rühren zugetropft, wobei wie in den vorhergehenden Beispielen darauf geachtet wurde, daß nie ein Überschuß an Tetrazoniumsalz-Lösung entstand. Das Reaktionsgemisch wurde ständig bei einem pH-Wert von 5,5–5,7 und einer Temperatur von 15° –20° C gehalten.

Nach Beendigung der Reaktion wurde das pH mit 2N HCl auf 4,0 gebracht, das Reaktionsgemisch filtriert und der Rückstand so lange mit Wasser gewaschen, bis keine Chloridionen mehr nachweisbar waren. Das Produkt wurde bei 55° –60° C getrocknet und zu einem orangen Pigment vermahlen. Dieses zeigt in einer Drucktinte auf Ölbasis verglichen mit einem analogen nach herkömmlichen Methoden (d. h. Zugabe von Kupplungskomponenten-Lösung zur Tetrazoniumsalz-Lösung bei 15° –20°C und einem pH-Wert von 5,5–5,7) hergestellten Produkt eine um 15% erhöhte Farbstärke und bessere Transparenz.

## Beispiel 11

Analog Beispiel 1 wurde eine Tetrazoniumsalz-Lösung hergestellt und auf pH 1,0 und eine Temperatur von 0° –5° C gebracht. Anschließend wurden 1,36 Teile Cirrasol ALN-WF® zugefügt.

Eine erste Kupplungskomponenten-Suspension wurde wie folgt hergestellt: 4,36 Teile 1-Acetoacetylamino-2,4-dimethylbenzol und 0,98 Teile NaOH wurden in 140 Teilen Wasser gelöst und die Lösung mit 20%igem Eisessig auf pH 6,0 gebracht. Diese Suspension wurde innerhalb von 30 Min. unter kräftigem Rühren der Tetrazoniumsalz-Lösung zugetropft.

Eine zweite Kupplungskomponenten-Suspension wurde auf 39,9 Teilen 1-Acetoacetylamino-2-chlorbenzol, 10,1 Teilen NaOH und 200 Teilen Wasser hergestellt und erneut das pH mittels 20%igem Eisessig auf 6,0 eingestellt. Zu dieser Suspension wurde die oben beschriebene, teilweise gekuppelte Tetrazoniumsalz-Lösung unter kräftigem Rühren bei pH 4,7–6,0 (Zugabe einer 10%igen NaOH-Lösung) und 15° –20° C zugetropft. Nach der Reaktion wurde das pH auf 6,5 gebracht (10%ige NaOH-Lösung) und das gelbe Produkt analog der vorangegangenen Beispiele isoliert. Das so erhaltene Produkt zeigt besonders bezüglich der Transparenz erhebliche Vorteile gegenüber einem entsprechend nach herkömmlichen Methoden hergestellten (Kupplungskomponenten → Tetrazoniumsalz-Lösung, sonst Bedingung wie in Beispiel 11) Pigment.

### Beispiel 12

Die Tetrazoniumsalz-Lösung wurde wie in Beispiel 11 hergestellt. Eine erste Kupplungskomponenten-Suspension, enthaltend 1-Acetoacetyl-2,4-dimethylbenzol wurde analog Beispiel 11 hergestellt. Die zweite Kupplungskomponenten-Suspension, enthaltend 36,1 Teile 4-Acetoacetylaminotoluol, 9,14 Teile NaOH und 200 Teile Wasser, wurde unter kräftigem Rühren mit 20%igem Eisessig auf pH 6,0 gebracht. Analog der im Beispiel 11 beschriebenen Methode wurde die Mischkupplung durchgeführt und das Produkt isoliert.

In Drucktinten auf Ölbasis zeigt das so hergestellte Pigment, verglichen mit einem nach herkömmlichen Methdoen (Kupplungskomponenten → Tetrazoniumsalz, Bedingungen identisch) hergestellten Pigment eine um 10% erhöhte Farbstärke.

### Beispiel 13

Unter den im Beispiel 1 beschriebenen Bedingungen wurde eine Tetrazoniumsalz-Lösung bei einem pH-Wert 1 hergestellt. Zu den schlußendlich zu verwendenden 500 Teilen wurden 1,37 Teile Cirrasol ALN-WF® in 50 Teilen Wasser zugefügt.

Eine Suspension zweier Kupplungskomponenten, nämlich 34,4 Teiule 1-Acetoacetylamino-2,4-dimethylbenzol und 8,7 Teile 2-Acetoacetylaminoanisol in 500 Teilen Wasser, enthaltend 9,21 Teile NaOH, wurde mit 25%igem Eisessig bei 15° C auf einen pH-Wert von 6,0 gebracht. 10% dieser Suspension wurden unter starkem Rühren der Tetrazoniumsalz-Lösung zugetropft und die Mischung während 30 Min. gerührt. Die teilweise gekuppelte Tetrazoniumsalz-Lösung wurde unter den im Beispiel 11 beschriebenen Bedingungen der verbleibenden Kupplungskomponenten-Suspension zugetropft und das gelbe Pigment isoliert.

Das so erhaltene Produkt zeigt in Druckfarbe auf Ölbasis gegenüber einem nach herkömmlichen Methoden hergestellten Pigment (Kupplungskomponente → Tetrazoniumsalz, Bedingungen wie in Beispiel 13) eine um 10% erhöhte Farbstärke.

### Beispiel 14

Die Tetrazoniumsalz-Lösung wurde analog Beispiel 13 hergestellt. Die Suspension zweier Kupplungskomponenten wurde ebenfalls gemäß Beispiel 13 bereitgestellt, wobei jedoch das 2-Acetoacetylaminoanisol durch 8 Teile 2-Acetoacetylaminotoluol ersetzt wurde. Die Kupplungsreaktion wird wie in Beispiel 13 beschrieben ist, durchgeführt. Nach Beendigung der Reaktion wurde der pH-Wert des Reaktionsgemisches mit einer 10%igen NaOH-Lösung auf 7,0 gebracht und eine Lösung von 13,7 Teilen hydrierter Abietinsäure (Staybelite Resin®) in 300 Teilen Wasser (95° C), enthaltend 1,5 Teile NaOH, nach Abkühlen auf 40° C zugetropft. Die Aufarbeitung des Pigments erfolgte wie in Beispiel 7 beschrieben ist.

Verglichen mit einem analogen nach herkömmlichen Methoden hergestellten Produkt zeigt das Pigment gemäß Beispiel 14 in Drucktinte auf Ölbasis eine um 10% höhere Farbstärke.

### Beispiel 15

Das Verfahren gemäß Beispiel 14 wurde wiederholt, jedoch wurde nach Beendigung der Kupplungsreaktion zusätzlich 1,3 Teile eines wasserlöslichen Farbstoffes, erhalten durch die Kupplung von tetrazotiertem 2,2'-Disulfonbenzidin und 1-Acetoacetylamino-2,4-dimethylbenzol in 160 Teilen zugetropft. Nach der Zugabe von hydrierter Abietinsäure gemäß Beispiel 14 erfolgte die Aufarbeitung analog Beispiel 7.

Verglichen mit einem analogen, nach herkömmlichen Methoden hergestellten Produkt (Kupplungskomponente → Tetrazoniumsalz, Bedingungen wie in Beispiel 15) zeigt das Pigment gemäß Beispiel 15 eine um 10% erhöhte Farbstärke in Drucktinten auf Ölbasis.

### Beispiel 16

Das Tetrazoniumsalz wurde durch Verrühren einer weichen Paste aus 17,35 Teilen o-Dianisidin in 100 Teilen Wasser, enthaltend 30,0 Teile konzentrierter Salzsäure (spez. Gewicht 1,18), mit 9,9 Teilen Natriumnitrit in 25 Teilen Wasser bei 0° – 5° C hergestellt. Eine klare Lösung wurde nach Zugabe von einem Teil Aktivkohle und anschließendem Filtrieren erhalten. Die Lösung wurde bei 0° – 5° C auf 300 Teile verdünnt, und danach wurde eine Lösung von 1 Teil Cirrasol ALN-WF® in 50 Teilen Wasser zugefügt.

Die Suspension der Kupplungskomponente erhielt man durch Mischen von 30,5 Teilen

1-Acetoacetylamino-2,4-dimethylbenzol und 7,2 Teilen NaOH in 300 Teilen Wasser. Diesem Gemisch wurden langsam 11,5 Teile Eisessig in 50 Teilen Wasser zugetropft, bis das pH 6,0 erreicht hatte. Die Kupplungsreaktion erfolgte analog Beispiel 13, und die Aufarbeitung des orangen Pigmentes erfolgte gemäß Beispiel 1 mit der Ausnahme, daß der pH-Wert auf 7,0 eingestellt wurde.

Verglichen mit einem analogen, nach herkömmlichen Methoden hergestellten Produkt (Kupplungskomponente → Tetrazoniumsalz, 15° – 20° C, pH 4,6 – 6,0) zeigt das Pigment gemäß Beispiel 16 eine um 10% erhöhte Farbstärke und erhöhte Transparenz in einer Drucktinte auf Ölbasis.

## Beispiel 17

Durch Verrühren von 15,2 Teilen 2-Nitro-4-methylanilin in 200 Teilen Wasser, enthaltend 25 Teile konzentrierter Salzsäure (spez. Gewicht 1,18), mit 6,9 Teilen Natriumnitrit in 25 Teilen Wasser bei 0° – 5° C wurde eine Daizoniumsalz-Lösung hergestellt. Durch Zugabe von einem Teil Aktivkohle und anschließendem Filtrieren erhielt man eine klare Lösung, welche auf 500 Teile verdünnt und anschließend mit einem Teil Cirrasol ALN-WF® in 50 Teilen Wasser behandelt wurde. Die Suspension der Kupplungskomponente wurde durch Vermischen von 15,1 Teilen β-Naphthol und 4,2 Teilen NaOH in 300 Teilen Wasser hergestellt. Dieser Mischung wurde eine 2N HCl-Lösung zugetropft, bis der pH-Wert 10,0 erreicht hatte. Die Suspension wurde bei 15° C auf 500 Teile verdünnt.

10% der Kupplungskomponenten-Suspension wurden langsam und unter kräftigem Rühren zur Diazoniumsalz-Lösung gegeben und während 30 Min. gerührt. Innerhalb von 60 Min. wurde die teilweise gekuppelte Diazoniumsalz-Lösung zur restlichen Suspension der Kupplungskomponente getropft, wobei durch kräftiges Rühren sichergestellt wurde, daß nie ein Überschuß an Diazoniumsalz im Reaktionsgemisch auftrat. Während der ganzen Reaktionszeit wurde die Temperatur zwischen 15° und 20° C und das pH durch Zugabe einer 20%igen Natriumcarbonatlösung zwischen 10,0 und 10,2 gehalten. Nach Beendigung der Reaktion wurde durch Zugabe einer 2N HCl-Lösung der pH-Wert auf 7,0 eingestellt und das Reaktionsgut auf 70° C erhitzt. Die Isolierung des roten Pigments erfolgte auf die im Beispiel 1 beschriebene Weise.

Verglichen mit einem analogen, nach herkömmlicher Methode (Kupplungskomponente → Diazoniumsalz, Bedingungen wie in Beispiel 16) hergestellten Produkt zeigt das Pigment gemäß Beispiel 17 in einem lufttrocknenden Dekorativlack auf Basis eines langöligen Soja-Alkydharzes und Terpentinölersatzes höhere Farbstärke, höhere Transparenz und eine attraktivere blaue Nuance.

## Beispiel 18

Eine Diazoniumsalz-Lösung wurde durch Lösen von 16,8 Teilen 2-Methoxy-4-nitroanilin in 300 Teilen Wasser, enthaltend 25 Teile konzentrierte Salzsäure (spez. Gewicht 1,18), und Diazotierung mit 6,9 Teilen Natriumnitrit in 25 Teilen Wasser bei 0° – 5° C hergestellt. Durch Zugabe von einem Teil Aktivkohle und anschließendem Filtrieren wurde eine klare Lösung erhalten, welche anschließend auf 500 Teile verdünnt und mit einem Teil Cirrasol ALN-WF® in 50 Teilen Wasser behandelt wurde.

Die Suspension der Kupplungskomponente wurde durch Verführen von 21,7 Teilen 2-Acetoacetylaminoanisol und 4,2 Teilen NaOH in 300 Teilen Wasser hergestellt. Durch Zugabe einer 25%igen Lösung von Eisessig in Wasser wurde der pH-Wert auf 6,0 eingestellt. Nach Zugabe von 20,5 Teilen Natriumacetattrihydrat wurde die Suspension bei 15° C auf 500 Teile verdünnt.

50% der Kupplungskomponenten-Suspension wurden zur Diazoniumsalz-Lösung zugetropft und die Mischung während 60 Min. gerührt. Innerhalb von 50 Min. wurde die teilweise gekuppelte Diazoniumsalz-Lösung zur restlichen Suspension der Kupplungskomponente unter kräftigem Rühren zugetropft. Während der ganzen Reaktion wurde die Temperatur zwischen 15° und 20° C und der pH-Wert mittels Zugabe einer 10%igen Lösung von NaOH zwischen 4,4 und 6,0 gehalten. Die Aufarbeitung des gelben Pigments erfolgte analog Beispiel 16.

Verglichen mit einem analogen, nach herkömmlicher Art (Kupplungskomponente → Diazoniumsalz, Bedingungen wie in Beispiel 18) hergestellten Produktes zeigt ein gemäß Beispiel 18 hergestelltes Pigment in dem in Beispiel 17 beschriebenen Dekorativlack eine um 10% erhöhte Farbstärke und verbesserte Deckkraft.

## Beispiel 19

Eine Diazoniumsalzlösung wurde hergestellt durch Lösen von 21 Teilen 2-Amino-4-chlor-5-methylbenzolsulfonsäure (2B-Säure) in 300 Teilen Wasser, enthaltend genügend Ammoniak (spez. Gewicht 0,88), um die Lösung schwach lackmusalkalisch zu halten. Eis wurde zugegeben, bis die Temperatur 4° C erreichte. Dann wurden 6,6 Teile Natriumnitrit, gefolgt von 30 Teilen konz. HCl (spez. Gewicht 1,18) zugegeben. Die End-Temperatur betrug 8° C.

Die Lösung der Kupplungskomponente erhielt man durch Lösen von 17,9 Teilen 2,3-Hydroxynaph-

thoesäure in 360 Teilen 15° C warmem Wasser, enthaltend 13,5 Teile Natriumhydroxid.

20% der oben erhaltenen Kupplungskomponentenlösung wurde langsam in die Diazoniumsalzlösung eingerührt und die erhaltene Mischung während 30 Min. weitergerührt. Dann wurde innert 6 Min. die Diazolösung, enthaltend die zugesetzte Kupplungskomponente, zum Rest der Kupplungskomponentenlösung unter heftigem Rühren zugegeben. Nach beendigter Kupplung wurde das pH des Reaktionsgemisches auf 10,0 eingestellt und während 30 Min. weitergerührt. Während der Kupplung wurde die Temperatur zwischen 15 und 20° C gehalten.

0,7 Teile mit Tallöl modifizierte Abietinsäure (Handelsname Primarex 80) wurde in 130 Teilen Wasser, enthaltend 0,9 Teile NaOH, bei 70°C gelöst und die erhaltene Lösung innert 5 Min. zum Kupplungsgemisch gegeben. Nach weiteren 5 Min. Rühren wurde auf 45°C erwärmt durch Einleiten von Dampf und das pH durch Zugabe von 2n Salzsäure auf 5,8 gestellt. Es wurde für weitere 10 Min. gerührt, dann langsam eine Lösung von $CaCl_2 \cdot 2\,H_2O$ in 175 Teilen Wasser zugegeben. Das pH der Lösung wurde auf 4,5 eingestellt, das Gemisch durch Einleiten von Dampf auf 80°C erhitzt und während 30 Min. bei dieser Temperatur gehalten, wobei das pH auf 3,0 fiel. Durch Zugabe von Natronlauge wurde es auf 6,75 erhöht. Das Produkt wurde abgenutscht, der Filterrückstand mit Wasser gewaschen, bis im Waschwasser keine Chlorionen mehr festgestellt wurden. Schließlich wurde mit 0,45 Teilen $CaCl_2 \cdot 2\,H_2O$ in 45 Teilen Wasser gewaschen und der Filterkuchen bei 50°C getrocknet, wobei ein rotes Pigment erhalten wurde, welches bei der Einarbeitung in Ölfirnis eine Drucktinte ergibt, die 5% farbstärker und transparenter ist als eine solche aus dem durch übliche Kupplungen erhaltenen Ca-2B-Toner.

## Beispiel 20

### a) Diazolösung

Eine Diazolösung wurde hergestellt durch Dispergieren von 15,1 Teilen 2-Methoxy-4-nitroanilin in 200 Teilen Salzsäure (spez. Gewicht 1,18). Die Diazotierung erfolgte durch Zugabe einer Lösung von 6,2 Teilen $NaNO_2$ in 25 Teilen Wasser unter Eiszugabe bei 5° C. Die Diazolösung wurde durch Zugabe von 1 Teil Aktivkohle geklärt, dann filtriert. Durch Zugabe von 0° warmem Wasser wurde das Volumen der Diazolösung auf 450 Vol.-Teile erhöht.

### b) Tetrazolösung

Diese wurde hergestellt durch Verrühren von 3,43 Teilen 3,3'-Dichlorbenzidindihydrochlorid in Wasser und Tetrazotieren auf übliche Weise mit einer Lösung von 1,51 Teilen $NaNO_2$ in 10 Teilen Wasser bei 0–5°. Die Tetrazolösung wurde wie unter a) klarfiltriert und das Volumen mit 0° warmem Wasser auf 100 gestellt.

### c) Suspension der Kupplungskomponente

Diese wurde erhalten durch Lösen von 21,7 Teilen 2-Acetoacetylaminoanisol und 4,2 Teilen NaOH in 300 Teilen Wasser, dann Ausfällen durch langsame Zugabe einer Lösung von 6,3 Teilen Eisessig in 25 Teilen Wasser unter energischem Rühren, wobei das pH auf 6,0 fiel.

### d) Herstellung des Zwischenproduktes

10% der unter c) erhaltenen Suspension der Kupplungskomponente wurde langsam unter heftigem Rühren zur Tetrazollösung b) gegeben und die Mischung während 30 Min. gerührt. Dann wurde der Niederschlag abfiltriert, mit 100 Teilen 0° warmem Wasser gewaschen, in 150 Teilen 0° warmem Wasser wieder aufgeschlämmt und dann zur Diazolösung a) gegeben.

### e) Kupplung und Nachbehandlung

Zum Rest der Kupplungskomponentensuspension c) wurden 18,5 Teile Natriumacetat-Trihydrat gegeben, dann die Mischung von Diazonium und Tetrazoniumverbindungen, enthaltend den zur Tetrazollösung gegebenen Kupplungskomponentenanteil, während 60 Min. zum Rest der Kupplungskomponentensuspension c) zugegeben, wobei so stark gerührt wurde, daß nie ein Überschuß an Diazonium- oder Tetrazoniumverbindung in der Kupplungsflüssigkeit vorhanden war. Während der Kupplung wurde die Temperatur zwischen 15 und 20°C gehalten. Nach vollendeter Kupplung wurde das pH auf 7,0 erhöht durch Zugabe von 10%iger wäßriger Natronlauge. Die

Suspension wurde durch Einleiten von Dampf auf 95°C erhitzt und während 1 h bei dieser Temperatur gehalten. Dann wurde abgenutscht, der Nutschkuchen chlorionenfrei gewaschen und bei 50–55°C getrocknet. Das erhaltene gelbe Pigment ergab in einem lufttrocknenden Lack aus einem mit Sojaöl modifizierten Alkydharz eine um 8% höhere Farbstärke und größere Deckkraft als ein auf herkömmliche Art durch Kuppeln von tetrazotiertem 3,3-Dichlorbenzidin oder diazotiertem 2-Methoxy-4-nitroanilin mit 2-Acetoacetylaminoanisol erhaltenes Produkt, in welchem die Diazolösung gemäß a) hergestellt mit der Tetrazollösung gemäß b) vereinigt wurde und die erhaltene Mischung unter sonst gleichen Bedingungen zur Kupplungssuspension c) zugegeben wurde.

**Patentansprüche**

1. Verfahren zum Herstellen von Monoazo- oder Disazopigmenten, dadurch gekennzeichnet, daß man

a) zu einer Lösung eines Diazonium- und/oder Tetrazoniumsalzes eines aromatischen oder heterocyclischen Amins eine Lösung oder Suspension, enthaltend 0,1–50 Gew.-% des theoretisch einzusetzenden Gesamtgewichtes einer oder mehrerer Kupplungskomponenten zugibt, und

b) das gemäß Verfahrensschritt a) erhaltene Produkt als Zusatz bei der Herstellung von Mono- oder Disazopigmenten oder deren Mischungen verwendet.

2. Verfahren gemäß Anspruch 1, dadurch gekennzeichnet, daß man das gemäß Verfahrensschritt a) erhaltene, teilweise gekuppelte Produkt zur Vervollständigung der Kupplung zu einer Lösung oder Suspension einer oder mehrerer im Verfahrensschritt a) eingesetzten oder davon verschiedenen Kupplungskomponenten zusetzt.

3. Verfahren gemäß Anspruch 1, dadurch gekennzeichnet, daß man im Verfahrensschritt a) 1–30 Gew.-% des theroetisch einzusetzenden Gesamtgewichtes einer oder mehrerer Kupplungskomponenten zugibt.

4. Verfahren gemäß Anspruch 1, dadurch gekennzeichnet, daß man im Verfahrensschritt a) 10–30 Gew.-% des theroretisch einzusetzenden Gesamtgewichtes einer oder mehrerer Kupplungskomponenten zugibt.

5. Verfahren gemäß Anspruch 1, dadurch gekennzeichnet, daß im Verfahrensschritt a) eine oder zwei Kupplungskomponenten eingesetzt werden.

6. Verfahren gemäß Anspruch 1, dadurch gekennzeichnet, daß im Verfahrensschritt b) eine oder zwei Kupplungskomponenten eingesetzt werden.

7. Verfahren gemäß Anspruch 1, dadurch gekennzeichnet, daß im Verfahrensschritt a) und b) jeweils eine Kupplungskomponente eingesetzt wird.

8. Verfahren gemäß Anspruch 1, dadurch gekennzeichnet, daß im Verfahrensschritt a) und b) die gleiche Kupplungskomponente eingesetzt wird.

9. Verfahren gemäß Anspruch 1, dadurch gekennzeichnet, daß man das teilweise gekuppelte Diazonium- oder Tetrazoniumsalz aus Verfahrensschritt a) direkt als Lösung oder Suspension weiterverarbeitet oder dieses vor dem Verfahrensschritt b) isoliert.

10. Verfahren gemäß Anspruch 1, dadurch gekennzeichnet, daß ein Tetrazoniumsalz eingesetzt wird.

11. Verfahren gemäß Anspruch 1, dadurch gekennzeichnet, daß das Tetrazoniumsalz ein tetrazotiertes 3,3'-Dichlorbenzidin, ein o-Dianisidin, ein Tetrachlorbenzidin, ein Dinitrobenzidin, ein o,o'-Dimethylbenzidin oder ein 2,2'-Disulfobenzidin ist.

12. Verfahren gemäß Anspruch 1, dadurch gekennzeichnet, daß das Diazoniumsalz ein diazotiertes heterocyclisches Amin oder ein Anilinderivat ist, welches mit einer oder mehreren Alkyl-, Aryl-, Aralkyl-, Nitro-, Alkoxy-, Aryloxy- oder Halogen-Gruppen substituiert sein kann.

13. Verfahren gemäß Anspruch 12, dadurch gekennzeichnet, daß das Diazoniumsalz ein diazotiertes Anilin ist, welches wasserlöslich machende Gruppen enthält.

14. Verfahren gemäß Anspruch 1, dadurch gekennzeichnet, daß im Verfahrensschritt a) und b) als Kupplungskomponente ein Acetoacetarylamid oder ein Pyrazolon verwendet wird.

15. Verfahren gemäß Anspruch 1, dadurch gekennzeichnet, daß dem Produkt ein wasserlöslicher Farbstoff zugegeben wird.

16. Verfahren gemäß Anspruch 15, dadurch gekennzeichnet, daß der wasserlösliche Farbstoff durch Kupplung tetrazotierten Benzidins und einem Acetoacetanilid oder Pyrazolon erhalten worden ist, wobei die Azo- und/oder die Kupplungskomponente eine oder mehrere Sulfo- oder Carboxyl-Gruppen enthalten.

17. Verwendung der gemäß Anspruch 1 hergestellten Verbindungen zum Färben von Kunststoffen, Anstrichsmittel, Drucktinten, Verpackungstiefdrucktinten, Tiefdruckfarben oder Tinten auf Ölbasis.

## Claims

1. A process for the preparation of monoazo or disazo pigments, which comprises

a) adding to a solution of a diazonium and/or tetrazonium salt of an aromatic or heterocyclic amine a solution or suspension containing 0.1 to 50% by weight of the total theoretical amount of one or more coupling components, and
b) using the product from steg (a) as additive in the preparation of the monoazo or disazo pirments or mixtures thereof.

2. A process according to claim 1, wherein the partly coupled product from step (a) is added to a solution or suspension of one or more coupling components used in, or different from those used in, said step (a), in order to bring the coupling to completion.
3. A process according to claim 1, wherein 1—30% by weight of the total theoretical amount of one or more coupling components is added in step (a).
4. A process according to claim 1, wherein 10—30% by weight of the total theoretical amount of one or more coupling components is added in step (a).
5. A process according to claim 1, wherein one or two coupling components are used in step (a).
6. A process according to claim 1, wherein one or two coupling components are used in step (b).
7. A process according to claim 1, wherein one coupling component is used in each of steps (a) and (b).
8. A process according to claim 1, wherein the same coupling component is used in steps (a) and (b).
9. A process according to claim 1, wherein the partly coupled diazonium or tetrazonium salt from step (a) is further used direct as solution or suspension or is isolated before step (b).
10. A process according to claim 1, wherein a tetrazonium salt is used.
11. A process according to claim 1, wherein the tetrazonium salt is a tetraazotised 3,3′-dichlorobenzidine, an o-dianisidine, a tetrachlorobenzidine, a dinitrobenzidine, an o,o′-dimethylbenzidine or a 2,2′-disulfobenzidine.
12. A process according to claim 1, wherein the diazonium salt is a diazotised heterocyclic amine or an aniline derivative which may be substituted by one or more alkyl, aryl, aralkyl, nitro, alkoxy or aryloxy groups or by one or more halogen atoms.
13. A process according to claim 12, wherein the diazonium salt is a diazotised aniline which contains water-solubilising groups.
14. A process according to claim 1, wherein an acetoacetarylamide or a pyrazolone is used as coupling component in steps (a) and (b).
15. A process according to claim 1, wherein a water-soluble dye is added to the product.
16. A process according to claim 15, wherein the water-soluble dye has been obtained by coupling tetrazotised benzidine and an acetoacetanilide or pyrazole, the azo and/or the coupling component containing one or more sulfo or carboxyl groups.
17. A method of colouring plastics, paints, printing inks, packaging inks, gravure inks or oil inks, which comprises the use of the compounds as claimed in claim 1.

## Revendications

1. Procédé de préparation de pigments mono-azoïques ou dis-azoïques, procédé caractérisé en ce que:

a) à une solution d'un sel de diazonium et/ou d'un sel de tétrazonium d'une amine aromatique ou hétérocyclique on ajoute une solution ou suspension renfermant de 0,1 à 50% en poids du poids total à mettre en jeu théoriquement d'un ou plusieurs copulants, et
b) on utilise le produit obtenu selon l'étape opératoire a) comme additif lors de la préparation de pigments mono-azoïques ou de pigments dis-azoïques ou de leurs mélanges.

2. Procédé suivant la revendication 1, caractérisé en ce qu'on ajoute le produit partiellement copulé qui a été obtenu selon l'étape a) à une solution ou suspension d'un ou plusieurs copulants identiques ou différents de ceux qui ont été utilisés dans l'étape a), cela pour compléter la copulation.
3. Procédé suivant la revendication 1, caractérisé en ce que, dans l'étape a), on ajoute de 1 à 30% en poids du poids théoriquement requis d'un ou plusieurs copulants.
4. Procédé suivant la revendication 1, caractérisé en ce que, dans l'étape a), on ajoute de 10 à 30% en poids du poids théoriquement requis d'un ou plusieurs copulants.
5. Procédé suivant la revendication 1, caractérisé en ce que, dans l'étape a), on utilise un ou deux copulants.
6. Procédé suivant la revendication 1, caractérisé en ce que, dans l'étape b), on utilise un ou deux copulants.

7. Procédé suivant la revendication 1, caractérisé en ce qu'on utilise un copulant dans chacune des étapes a) et b).

8. Procédé suivant la revendication 1, caractérisé en ce qu'on utilise le même copulant dans l'étape a) et dans l'étape b).

9. Procédé suivant la revendication 1, caractérisé en ce que le sel de diazonium ou de tétrazonium partiellement copulé qui provient de l'étape a) est ensuite utilisé directement à l'état de solution ou de suspension, ou encore est isolé avant l'étape b).

10. Procédé suivant la revendication 1, caractérisé en ce qu'on utilise un sel de tétrazonium.

11. Procédé suivant la revendication 1, caractérisé en ce que le sel de tétrazonium utilisé dérive de la dichloro-3,3′ benzidine, de l'o-dianisidine, d'une tétrachlorobenzidine, d'une dinitrobenzidine, de l'o,o′-diméthylbenzidine ou de la disulfo-2,2′ benzidine.

12. Procédé suivant la revendication 1, caractérisé en ce que le sel de diazonium dérive d'une amine hétérocyclique ou d'une aniline qui portent éventuellement un ou plusieurs substituants pris dans l'ensemble constitué par les radicaux alkyles, aryles, aralkyles, nitro, alcoxy et aryloxy ainsi que les halogènes.

13. Procédé suivant la revendication 12, caractérisé en ce que le sel de diazonium est une aniline diazotée qui porte des radicaux hydrosolubilisants.

14. Procédé suivant la revendication 1, caractérisé en ce qu'on utilise comme copulant, dans les étapes a) et b), un acétoacétylarylamide ou une pyrazolone.

15. Procédé suivant la revendication 1, caractérisé en ce qu'on ajoute au produit un colorant soluble dans l'eau.

16. Procédé suivant la revendication 15, caractérisé en ce que le colorant soluble dans l'eau a été obtenu par copulation du tétrazoïque de la benzidine avec un acétoacétanilide ou une pyrazolone, la composante de diazotation et/ou le copulant contenant un ou plusieurs radicaux sulfo ou carboxy.

17. Application des composés préparés suivant la revendication 1 à la coloration de matières plastiques, de vernis, de peintures, d'encres d'imprimerie, d'encres d'héliogravure pour emballages, d'encres d'héliogravure ou d'encres à base d'huile.